# EUROPEAN PATENT APPLICATION

(11) **EP 4 484 650 A1**
(43) Date of publication of application: **01.01.2025**
(21) Application number: 24170675.3
(22) Date of filing: 17.04.2024
(51) Int. Cl.: E02F 3/96, E02F 9/20, G05G 9/047, E02F 3/18

(54) **INTUITIVE CONFIGURABLE MACHINE ATTACHMENT CONTROLS**

(30) Priority: 15.05.2023 US 202318317151
(71) Applicant: Caterpillar, Inc., Peoria, IL 61629-6450 (US)
(72) Inventor: MAYS, Christopher, Raleigh 27615 (US); NICHOLSON, Christian, Raleigh 27606 (US); MORTENSEN, Michael, Clayton 27520 (US)
(74) Representative: Klang, Alexander H.

(57) **Abstract**

A machine includes a first implement, a first machine control component, and a control system which includes a memory and a processor in communication with the memory. The processor executes instructions stored in the memory to cause the control system to detect the first implement, determine whether a first configuration corresponding to the first implement is stored in the memory, and configure the first machine control component based on the first configuration when the first configuration is stored in the memory.

## Description

### Technical Field

The present disclosure relates generally to configuring machine attachment controls and, for example, to intuitively configuring one or more multi-function joysticks for controlling a machine attachment.

### Background

A machine, such as a skid steer loader, may perform different tasks (e.g., at a work site) using an implement. For example, a bucket implement attached to the machine may perform an earth moving task, a snow moving task, and/or another material moving task. The machine is configured to attach to a plurality of different implements for performing a variety of functions, for example a stump grinding implement and a cold planning implement. The machine may include joysticks (e.g., two joysticks) for controlling the attached implement to perform the different tasks. In this regard, an operator may use the joysticks concurrently to control the implement to perform the different tasks. In other words, the operator may use both hands to operate the joysticks to control the implement to perform the different tasks, possibly both hands simultaneously.

The operator may use buttons or other input devices included on the joysticks or in an operator cabin of the machine to control the implement attached to the machine. The implement could be configured to move in various directions and to perform operations in response to inputs received at the buttons or other input devices. The machine can operate with a variety of different implements, each having its own range of motions and operations. For each implement, the functions associated with the buttons or other input devices may vary causing an operator to learn a large variety of button and input combinations to operate implements. Further, if the implement is rarely used by an operator, the operator may need downtime to refresh their knowledge of the controls for the particular implement, resulting in downtime. In some cases, manual configuration of the buttons and inputs may be needed each time the implement is changed. This could lead to misconfiguration and confusion of the operator that may negatively affect productivity at a work site and/or may negatively impact safety of the area around the machine.

The multi-function joysticks and control system of the present disclosure solve one or more of the problems set forth above and/or other problems in the art.

### Summary

A machine includes a first implement; a first machine control component; and a control system. The control system includes a memory and a processor in communication with the memory. The processor is configured to execute instructions stored in the memory to cause the control system to detect the first implement; determine whether a first configuration corresponding to the first implement is stored in the memory; and configure the first machine control component based on the first configuration when the first configuration is stored in the memory. When the first configuration is not stored in the memory the instructions further cause the control system to create the first configuration based on one or more of data received from a remote source or inputs received locally at the machine; store the first configuration in the memory; and configure the first machine control component based on the first configuration. The instructions may further cause the control system to receive a signal from the first implement; and control the first implement based on the signal. The machine may further comprise a second machine control component, wherein the instructions further cause the control system to configure the second machine control component based on the first configuration when the first configuration is stored in the memory. The first machine control component may comprise a first plurality of input elements, the first implement is configured to move along a first axis, the first configuration configures two of the first plurality of input elements to control movement along the first axis, and a location of the two of the first plurality of input elements corresponds to the first axis. The first implement may be further configured to move along a second axis, and wherein the first configuration configures another two of the first plurality of input elements to control movement along the second axis, and a location of the another two of the first plurality of input elements corresponds to the second axis. The second machine control component may comprise a second plurality of input elements, the first implement is configured to move along a second axis, and wherein the first configuration configures two of the second plurality of input elements to control movement along the second axis, and a location of the two of the second plurality of input elements corresponds to the second axis. The first implement may be further configured to move along a third axis corresponding to a first side of the first implement; move along a fourth axis corresponding to a second side of the first implement, wherein the machine may further comprise a cab, and wherein a location of the first machine control component in the cab corresponds to the first side and a location of the second machine control component corresponds to the second side, wherein the first configuration configures at least a portion of the first plurality of input elements to control movement along the third axis, and wherein the first configuration configures at least a portion of the second plurality of input elements to control movement along the fourth axis.

A control system includes a memory and a processor in communication with the memory. The processor may be configured to execute instructions stored in the memory to cause the control system to detect a first implement of a machine; determine whether a first configuration corresponding to the first implement is stored in the memory; and configure a first machine control component based on the first configuration when the first configuration is stored in the memory. When the first configuration is not stored in the memory the instructions may further cause the control system to create the first configuration based on one or more of data received from a remote source or inputs received locally at the machine; store the first configuration in the memory; and configure the first machine control component based on the first configuration. The instructions may further cause the control system to receive a signal from the first implement and control the first implement based on the signal. The instructions may further cause the control system to configure a second machine control component based on the first configuration when the first configuration is stored in the memory. The first machine control component may comprise a first plurality of input elements, the first implement is configured to move along a first axis, the first configuration configures two of the first plurality of input elements to control movement along the first axis, and a location of the two of the first plurality of input elements corresponds to the first axis. The first implement may be further configured to move along a second axis, and wherein the first configuration configures another two of the first plurality of input elements to control movement along the second axis, and a location of the another two of the first plurality of input elements corresponds to the second axis. The second machine control component may comprise a second plurality of input elements, the first implement is configured to move along a second axis, and wherein the first configuration configures two of the second plurality of input elements to control movement along the second axis, and a location of the two of the second plurality of input elements corresponds to the second axis. The first implement may be configured to move along a third axis corresponding to a first side of the first implement; move along a fourth axis corresponding to a second side of the first implement, wherein the machine comprises a cab, and wherein a location of the first machine control component in the cab corresponds to the first side and a location of the second machine control component corresponds to the second side, wherein the first configuration configures at least a portion of the first plurality of input elements to control movement along the third axis, and wherein the first configuration configures at least a portion of the second plurality of input elements to control movement along the fourth axis.

A method for intuitive machine control component configuration comprises detecting, by a control system of a machine, a first implement coupled to the machine; determining, by the control system, whether a first configuration corresponding to the first implement is stored in a memory; and configuring, by the control system, the first machine control component based on the first configuration when the first configuration is stored in the memory. The method may further comprise, when the first configuration is not stored in the memory, creating, by the control system, the first configuration based on one or more of data received from a remote source or inputs received locally at the machine; storing, by the control system, the first configuration in the memory; and configuring, by the control system, the first machine control component based on the first configuration. The method may further comprise receiving, by the control system, a signal from the first implement; and controlling, by the control system, the first implement based on the signal. The method may further comprise configuring, by the control system, a second machine control component based on the first configuration.

### Brief Description of the Drawings

Fig. 1 is a diagram of an example machine described herein.
Fig. 2 is a diagram of a top view of the operator cabin of Fig. 1 described herein.
Fig. 3 is a diagram of an example machine control component described herein.
Fig. 4 is a diagram of a left side view of an example machine control component described herein.
Fig. 5 is a diagram of an example machine control component described herein.
Fig. 6 is a diagram of a left side view of an example machine control component described herein.
Fig. 7 is a diagram of an example machine control component described herein.
Fig. 8 is a diagram of a rear view of an example machine control component described herein.
Fig. 9 is a diagram of an example machine control component described herein.
Fig. 10 is a diagram of a rear view of an example machine control component described herein.
Fig. 11 is a diagram of an embodiment of a stump grinder implement.
Fig. 12 is a diagram of an embodiment of a cold planer implement.
Fig. 13 is a flow diagram of an embodiment of a method for configuring implement control components.

### Detailed Description

The present disclosure relates to machine control components (e.g., joysticks) that control various operations of a machine and/or an implement of the machine. For example, the machine control components may include input elements (e.g., buttons, switches, etc.) configured to control various operations and/or movements of the implement, input elements configured to control a sound output by the machine, input elements configured to control a speed and/or direction of the machine, and input elements configured to control an operation of a display device of the machine concurrently with an operation of the machine (e.g., concurrently with an operation of an implement of the machine and/or a movement of the machine).

The input elements (discussed above) may be provided in a compact manner that addresses spatial constraints in an operator cabin of the machine. As an example, a first subset of the input elements may be provided on an asymmetric faceplate of an asymmetric grip portion of a first joystick and a second subset of the input elements may be provided on an asymmetric faceplate of an asymmetric grip portion of a second joystick. Additionally, the input elements are available to be selected by the operator without requiring the operator to remove a hand from the disclosed machine control components. The term "machine" may refer to a machine that performs an operation associated with an industry such as, for example, mining, construction, farming, transportation, or another industry. Moreover, one or more implements may be connected to the machine.

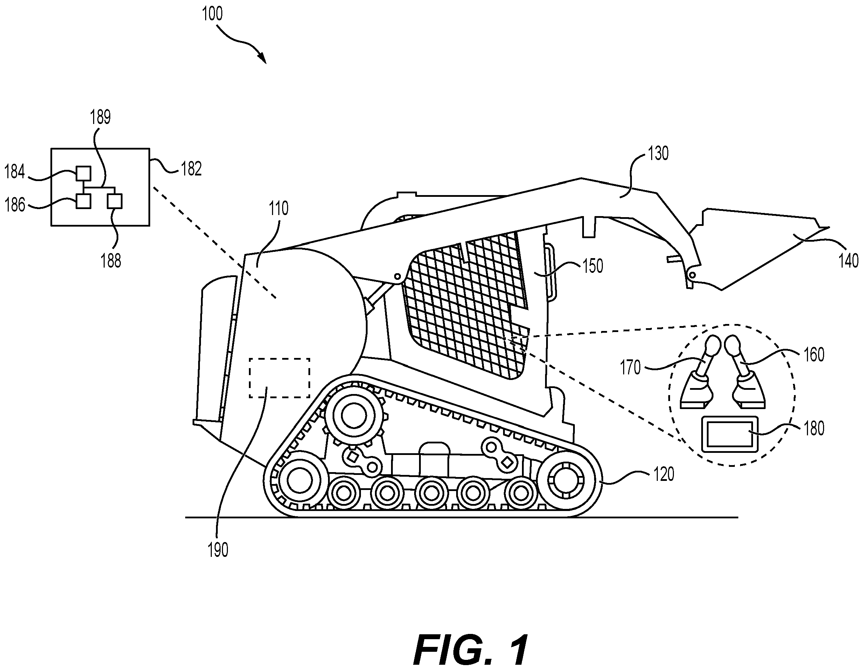

Fig. 1 is a diagram of an example machine 100 described herein. As shown in Fig. 1, machine 100 is embodied as a material moving machine, such as a skid steer loader. Alternatively, machine 100 may be another type of material moving machine such as a bulldozer, a track-type tractor, a wheel loader, a multi-terrain loader (MTL), a compact track loader (CTL), a compact wheel loader (CWL), and/or a similar machine designed to operate with one or more implements.

As shown in Fig. 1, machine 100 includes a machine body 110, ground engaging members 120, lift arms 130, an implement 140, and an operator cabin 150. Ground engaging members 120 may be mounted on machine body 110 and are driven by one or more engines and drive trains (not shown). Ground engaging members 120 may be configured to propel machine 100. As shown in Fig. 1, ground engaging members 120 includes tracks. Alternatively, ground engaging members 120 may include wheels, rollers, and/or similar members.

Lift arms 130 may be mounted on machine body 110 and configured to raise and lower implement 140. Implement 140 may be mounted on distal ends of lift arms 130. As shown in Fig. 1, implement 140 includes a bucket. Alternatively, implement 140 may include a snow blower, loader, and/or another type of implement. In some examples, implement 140 may be operated using one or more hydraulic controls.

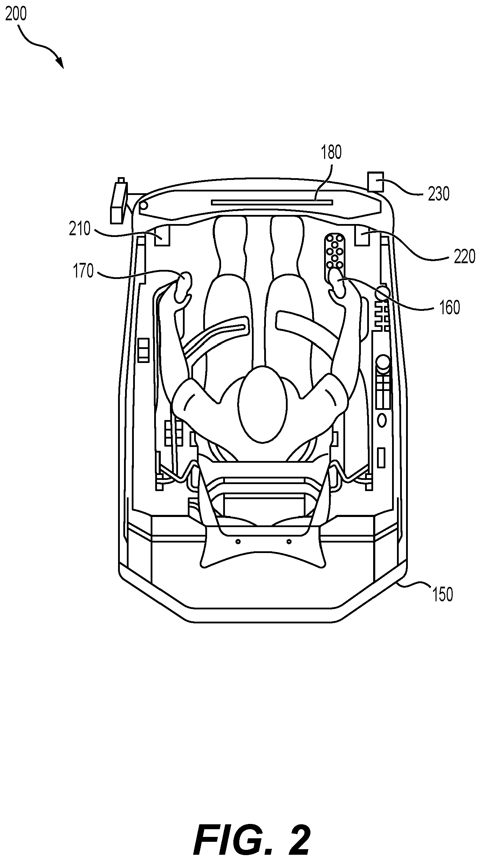

As shown in Fig. 1, operator cabin 150 includes a machine control component 160 (e.g., a first machine control component), a machine control component 170 (e.g., a second machine control component), and a display device 180. Machine control component 160 may include one or more input elements to generate signals that control an operation of display device 180 concurrently with controlling a movement of machine 100 and/or a movement of implement 140, as described in more detail below in connection with Fig. 2. Machine control component 160 may include a joystick, a lever, and/or a similar type of control component.

Machine control component 170 may include one or more input elements to generate signals that control a movement of machine 100 and/or a movement of implement 140. In some examples, unlike machine control component 160, machine control component 170 does not include one or more input elements to generate signals that control an operation of display device 180. In addition to machine control component 160, machine control component 170 also includes one or more input elements to generate signals that control an operation of display device 180. Machine control component 170 may include a joystick, a lever, and/or a similar type of control component.

Display device 180 may include a liquid crystal display (LCD), a light-emitting diode (LED) display, or another type of display capable of outputting graphical and/or textual information (e.g., information regarding machine 100, information regarding implement 140, and/or information regarding an environment associated with machine 100). The information regarding machine 100 may include information displaying gauges of machine 100 (e.g., fuel gauge, oil gauge, engine temperature gauge, and/or another gauge(s)).

The information regarding implement 140 may include information identifying an amount of wear (or an age) of implement 140, information identifying usage (e.g., type, amount (e.g., hours), among other examples) of implement 140, information identifying maintenance and/or service required by implement 140, among other examples. The information regarding the environment associated with machine 100 may include images and/or a video feed of a rearview of machine 100, images and/or a video feed of side views of machine 100, images and/or a video feed of a forward view of machine 100, and/or images and/or a video feed of an area surrounding machine 100.

As shown in Fig. 1, machine 100 includes a control system 182. The control system 182 includes a controller 184, memory 186, and I/O device 188. Controller 184 may be a microprocessor, microcontroller, central processing unit (CPU), Application Specific Integrated Circuit (ASIC) or some other device configured to execute instructions to control portions of machine 100. Memory 186 may be random access memory (RAM) and/or read only memory (ROM) configured to store data and/or instructions for use by controller 184. I/O device 188 may include liquid crystal displays (LCDs), touch screen displays, keyboards, keypads, switches, dials, mice, track balls, voice recognizers, card readers, paper tape readers, printers, video monitors, or other well-known input devices. Also, I/O device 188 may include a transceiver capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. Controller 184, memory 186, and I/O device 188 communicate via bus 189. In some cases, some of these components may not be present or may be combined in various combinations with one another or with other components not shown. These components might be located in a single physical entity or in more than one physical entity. Any actions described herein as being taken by the controller 184 might be taken by the controller 184 alone or by the controller 184 in conjunction with one or more components shown or not shown in Fig. 1.

As shown in Fig. 1, machine 100 includes a hydraulic system 190. Hydraulic system 190 may be configured to supply hydraulic fluid to control an operation of implement 140 and/or a movement of implement 140. For example, hydraulic system 190 may be configured to supply hydraulic fluid to cause implement 140 to perform one or more operations and/or cause implement 140 to move in one or more directions.

As indicated above, Fig. 1 is provided as an example. Other examples may differ from what was described in connection with Fig. 1.

Fig. 2 is a diagram of a top view 200 of operator cabin 150 of Fig. 1 described herein. As shown in Fig. 2, operator cabin 150 may include a first speaker 210, a second speaker 220, and a horn 230. First speaker 210, second speaker 220, and horn 230 may each be configured to provide a sound output. As an example, first speaker 210 and second speaker 220 may be configured to provide a sound output internally with respect to operator cabin 150. For instance, first speaker 210 and second speaker 220 may be configured to provide a sound output from an entertainment system of machine 100 (e.g., an audio video system), from a device of an operator of machine 100, among other examples. Horn 230 may be configured to provide a sound output externally with respect to operator cabin 150 (e.g., to provide a warning to one or more individuals in a vicinity of machine 100).

As shown in Fig. 2, an operator may control operation of machine 100 using machine control component 160 and machine control component 170. In some instances, the operator may control an operation of machine 100 using machine control component 160 concurrently with using machine control component 170.

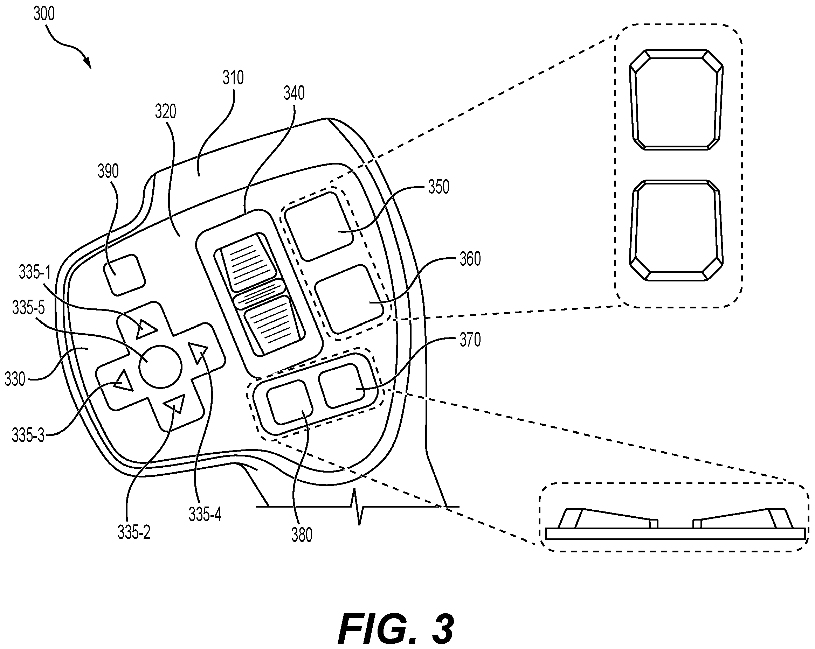

In some implementations, machine control component 160 may control a movement of implement 140 and machine control component 170 may control a movement of machine 100. For example, machine control component 160 may include hydraulic controls for controlling implement 140 (as explained in more detail below in connection with Fig. 3) and machine control component 170 may include controls for controlling ground engaging members 120. For instance, the operator may control a movement of implement 140 by interacting with machine control component 160 (e.g., interacting with the hydraulic controls) using a right hand while concurrently controlling a movement of machine 100 by interacting with machine control component 170 using a left hand.

In some implementations, machine control component 160 may control a movement of machine 100 and machine control component 170 may control a movement of implement 140, which is the opposite configuration of that described in the preceding paragraph. For example, machine control component 160 may include controls for controlling ground engaging members 120 and machine control component 170 may include hydraulic controls for controlling implement 140. For instance, the operator may control a movement of machine 100 by interacting with machine control component 160 using the right hand while concurrently controlling a movement of implement 140 by interacting with machine control component 170 (e.g., interacting with the hydraulic controls) using the left hand.

In some implementations, machine control component 160 may control a movement of machine 100 and/or may control a movement of implement 140, and machine control component 170 may control a movement of machine 100 and/or may control a movement of implement 140. For example, machine control component 160 may include controls for controlling ground engaging members 120 and/or may include hydraulic controls for controlling implement 140. Similarly, machine control component 170 may include controls for controlling ground engaging members 120 and/or may include hydraulic controls for controlling implement 140. For instance, the operator may control a movement of machine 100 and/or implement 140 by interacting with machine control component 160 using the right hand while concurrently controlling a movement of machine 100 and/or implement 140 by interacting with machine control component 170 using the left hand.

With respect to controlling the movement of machine 100, a forward movement of machine control component 160 or machine control component 170 may cause machine 100 to move in a forward direction, and a backward movement of machine control component 160 or machine control component 170 may cause machine 100 to move in a backward direction. With respect to controlling the movement of implement 140, a forward movement of machine control component 160 or machine control component 170 may cause implement 140 to move in a forward or upward direction, and a backward movement of machine control component 160 or machine control component 170 may cause implement 140 to move in a backward (or reverse) or downward direction.

In some examples, machine control component 160 may control a forward movement and a backward movement of implement 140 and machine control component 170 may control lateral movements of implement 140. For example, machine control component 160 may include hydraulic controls for controlling the forward movement and the backward movement of implement 140 and machine control component 170 may include hydraulic controls for controlling the lateral movements of implement 140. With respect to the lateral movements of implement 140, assume that implement 140 is a blade, for example. In such example, the lateral movements of implement 140 may include tilting implement 140 to the left and/or tilting implement 140 to the right.

Alternatively to machine control component 160 controlling the forward movement and the backward movement of implement 140 and machine control component 170 controlling the lateral movements of implement 140, machine control component 160 may control the lateral movements of implement 140 and machine control component 170 may control the forward movement and the backward movement of implement 140. For example, machine control component 160 may include hydraulic controls for controlling the lateral movements of implement 140 and machine control component 170 may include hydraulic controls for controlling of the forward movement and the backward movement of implement 140.

In some implementations, machine control component 160 may control the forward movement, the backward movement, and the lateral movements of implement 140. For example, machine control component 160 may include hydraulic controls for controlling the forward movement of implement 140, controlling the backward movement of implement 140, and controlling the lateral movements of implement 140. Alternatively, machine control component 170 may control the forward movement, the backward movement, and the lateral movements of implement 140. For example, machine control component 170 may include hydraulic controls for controlling the forward movement of implement 140, controlling the backward movement of implement 140, and controlling the lateral movements of implement 140.

With respect to controlling the forward movement and the backward movement of implement 140, in some examples, a forward movement of machine control component 160 or machine control component 170 may cause implement 140 to move in a forward or upward direction. A backward movement of machine control component 160 or machine control component 170 may cause implement 140 to move in a backward or downward direction. With respect to controlling the lateral movements of implement 140, in some examples, lateral movements of machine control component 160 or machine control component 170 may cause corresponding lateral movements of implement 140.

Additionally, or alternatively, to controlling the movements of implement 140, machine control component 160 and/or machine control component 170 may control an opening and a closing of implement 140 (e.g., when implement 140 is a bucket or a similar implement having a movable cover or scraper (not shown)). For example, machine control component 160 may include hydraulic controls for controlling the opening of implement 140 and/or for controlling the closing of implement 140. Additionally, or alternatively, machine control component 170 may include hydraulic controls for controlling the opening of implement 140 and/or for controlling the closing of implement 140.

In some implementations, machine control component 160 and/or machine control component 170 may control an operation of implement 140. For example, machine control component 160 may include hydraulic controls for controlling an initiation of the operation, for controlling a termination of the operation, and/or for providing proportional control of the operation (e.g., for increasing a speed of the operation, for decreasing the speed of the operation, for increasing an intensity of the operation, for decreasing the intensity of the operation, among other examples).

Additionally, or alternatively, machine control component 170 may include hydraulic controls for controlling the initiation of the operation, for controlling the termination of the operation, and/or for providing proportional control of the operation. The operation may include a digging operation, a sweeping operation, a material moving operation (e.g., snow blowing, snow shoveling, rock moving, among other examples), a paving operation, a brush cutting operation, among other examples.

Machine control component 160 may be configured to control an operation of display device 180 concurrently with the controlled movements of machine 100 and/or implement 140 described above.

As indicated above, Fig. 2 is provided as an example. Other examples may differ from what was described in connection with Fig. 2.

Fig. 3 is a diagram of an asymmetric machine control component 300. Asymmetric machine control component 300 could be installed in machine 100 as either machine control component 170 or machine control component 170.

As shown in Fig. 3, asymmetric machine control component 300 may include an asymmetric grip portion 310 that includes an asymmetric faceplate 320. As shown in Fig. 3, asymmetric faceplate 320 may include an input element 330, an input element 340, an input element 350, an input element 360, an input element 370, an input element 380, and an input element 390. In some examples, asymmetric machine control component 300 may have a different look and feel and/or include a greater number or a lesser number of input elements. The input elements of Fig. 3 may include buttons, switches, and/or other types of input elements.

Input element 330 may include input elements 335 (e.g., input elements 335-1 to 335-5). Input elements 335 may include buttons, switches, and/or other types of input elements. The operator may use input element(s) 335 of input element 330 to control the operation of display device 180 while concurrently using one or more other input elements (e.g., input element 340, input element 350, input element 360, input element 370, and/or input element 380) to control a movement of machine 100 and/or an operation of implement 140. For example, while moving machine control component 160 with a right hand of the operator to control an operation of machine 100 or implement 140, the operator may control the operation of display device 180 by interacting with input element(s) 335 using a right thumb of the operator (e.g., to perform complex operation of display device 180, such as navigating different screens at different levels in order to navigate and select from potentially hundreds of items).

Input element 340, input element 350, input element 360, input element 370, and input element 380 may be part of hydraulic controls of machine control component 160. For example, input element 340, input element 350, input element 360, input element 370, and input element 380 may control hydraulic system 190 to cause hydraulic system 190 to supply hydraulic fluid to control an operation and/or a movement of implement 140. Input element 340, input element 350, input element 360, input element 370, and input element 380 may be configured to control hydraulic system 190 to cause different movements of implement 140.

Input element 340 may be configured to control an operation of implement 140 and/or a movement of implement 140. As shown in Fig. 3, input element 340 may be implemented as a scrolling input element (or a rolling input element). Input element 340 may be configured for proportional control of the operation and/or for proportional control of the movement of implement 140, in a manner similar to the manner described above in connection with Fig. 2. For example, scrolling (or rolling) input element 340 in a first direction (e.g., an upward direction) may increase a speed of the operation, increase an intensity of the operation, increase a speed of the movement, among other examples. Continuing with this example, scrolling (or rolling) input element 340 in a second direction (e.g., a downward direction) may decrease the speed of the operation, decrease an intensity of the operation, decrease the speed of the movement, among other examples.

As shown in Fig. 3, a pair of input elements (a pair of input element 350 and input element 360, a pair of input element 370 and input element 380, among other examples) may have a same irregular shape and may be positioned adjacent to and as mirrored images of each other. As an example, input element 350 and input element 360 may have a same irregular shape and may be positioned adjacent to and as mirrored images of each other. As another example, input element 370 and input element 380 may have a same irregular shape and may be positioned adjacent to and as mirrored images of each other. As shown in Fig. 3, the irregular shape may be a keystone shape.

As further shown in Fig. 3, a first side, of an input element of a pair of input elements, may be raised higher than a second side of the input element. The first side may be opposite the second side. For instance, a height of first sides, of a first input element and a second input element of the pair of input elements, may be lower than a height of second sides of the first input element and the second input element. The first sides may be closer to each other than the second sides.

In some examples, input element 350, input element 360, input element 370, and input element 380 may be configured to control movements of implement 140. For example, input element 350 may cause a movement of implement 140 in a forward or upward direction, input element 360 may cause a movement of implement 140 in a reverse or downward direction, input element 370 may cause a lateral movement of implement 140 in a first direction, and input element 380 may cause a lateral movement of implement 140 in a second direction (opposite the first direction).

In some examples, input element 350, input element 360, input element 370, and input element 380 may be configured to control an operation of implement 140. For example, one of input element 350, input element 360, input element 370, or input element 380 may be configured to initiate the operation while another one of input element 350, input element 360, input element 370, or input element 380 may be configured to terminate the operation. Alternatively, the operation could be performed only while the associated one of input element 350, input element 360, input element 370, or input element 380 is pressed, and when that associated one of input element 350, input element 360, input element 370, or input element 380 is released, the operation ends.

In some instances, a pair of input elements (of input element 350, input element 360, input element 370, and input element 380) may be configured for proportional control, as explained above in connection with input element 340. For example, input element 350 may increase a speed of an operation of implement 140 and input element 360 may decrease the speed of the operation of implement 140, input element 370 may increase an intensity of the operation of implement 140 and input element 380 may decrease the intensity of the operation of implement 140, among other examples.

In some examples, input element 350, input element 360, input element 370, and input element 380 may be used in connection with different implements that may replace implement 140 mounted on lift arms 130 and/or that may be connected to machine 100 in addition to implement 140. For example, input element 350 may be used to adjust a configuration of machine 100 to operate a second implement when the second implement replaces implement 140 and/or when the second implement is connected to machine 100, input element 360 may be used to adjust a configuration of machine 100 to operate a third implement when the third implement replaces implement 140 and/or when the third implement is connected to machine 100, and so on.

In some implementations, input element 330, input element 340, input element 350, input element 360, input element 370, and/or input element 380 may be configurable (e.g., programmable) to cause machine 100, implement 140, or display device 180 to perform an action. For example, input element 330, input element 340, input element 350, input element 360, input element 370, and/or input element 380 may be programmed to cause machine 100, implement 140, and/or display device 180 to perform any one or more of the actions described above, such as any one or more of the actions described above in connection with input element 330, input element 340, input element 350, input element 360, input element 370, and/or input element 380.

Input element 390 may be programmed to perform an action desired by the operator. In some instances, input element 390 may be programmed to perform an action frequently performed when the operator is operating machine 100. As an example, input element 390 may be programmed to cause machine 100, implement 140, and/or display device 180 to perform any one or more of the actions described above, such as any one or more of the actions described above in connection with input element 330, input elements 335-1 to 335-5, input element 340, input element 350, input element 360, input element 370, input element 380, and/or other input elements described herein.

In some implementations, input element 340, input element 350, input element 360, input element 370, input element 380, and/or input element 390 may be part of primary controls of machine 100 (e.g., a first subset of the primary controls). Input elements 330 and 335-1 to 335-5 may be part of secondary controls of machine 100 (e.g., a first subset of the secondary controls). The primary controls may refer to input elements that are used more frequently by the operator than the secondary controls (e.g., more frequently than input elements included in the secondary controls). In some examples, the primary controls may include input elements that control an operation of machine 100, a movement of implement 140, and/or an operation of implement 140. As shown in Fig. 3, the primary controls may be provided on a first portion of faceplate 320 and the secondary controls may be provided on a second portion of faceplate 320.

As shown in Fig. 3, the input elements may be arranged to enable the operator to reach the input elements using a thumb while the operator is holding a shaft portion of asymmetric machine control component 300. In other words, a distance between the input elements may enable the operator to reach all the input elements with the thumb without having to release the grasp on the shaft portion of asymmetric machine control component 300. In some instances, the distance may be determined based on a hand size of an average operator.

As indicated above, Fig. 3 is provided as an example. Other examples may differ from what was described in connection with Fig. 3. For example, in some implementations, input element 330 and input elements 335 may be provided on asymmetric machine control component 500 (instead of asymmetric machine control component 300). Alternatively, a first subset of input elements 335 may be provided on asymmetric machine control component 300 and a second subset of input elements 335 may be provided on asymmetric machine control component 500. For example, input elements 335-1 to 335-4 may be provided on asymmetric machine control component 300 and input element 335-5 may be provided on asymmetric machine control component 500, or vice versa.

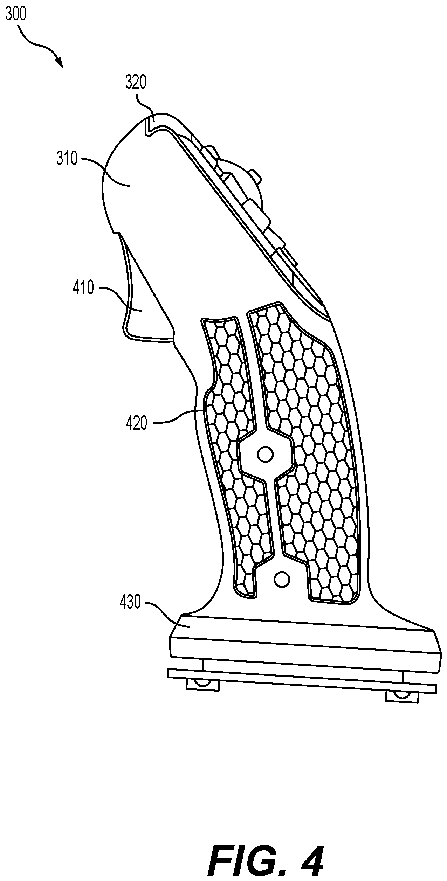

Fig. 4 is a diagram of a left side view of an example asymmetric machine control component 300 described herein. The elements of asymmetric machine control component 300 have been described above with respect to Fig. 3. As shown in Fig. 4, asymmetric machine control component 300 may include an input element 410, a shaft portion 420, and a base portion 430. Input element 410 may be configured to adjust a gear ratio of a transmission of machine 100. The adjustment of the gear ratio may adjust a speed of machine 100 resulting from a movement of asymmetric machine control component 300 and/or a movement of asymmetric machine control component 500. In other configurations, input element 410 may control other operations of the machine 100 or the implement 140.

Base portion 430 may be configured to enable asymmetric machine control component 300 to be mounted to a portion of operator cabin 150 (as described above in connection with Fig. 2).

As indicated above, Fig. 4 is provided as an example. Other examples may differ from what was described in connection with Fig. 4, such as with regard to the number and/or placement of the various input elements and textured sections provided.

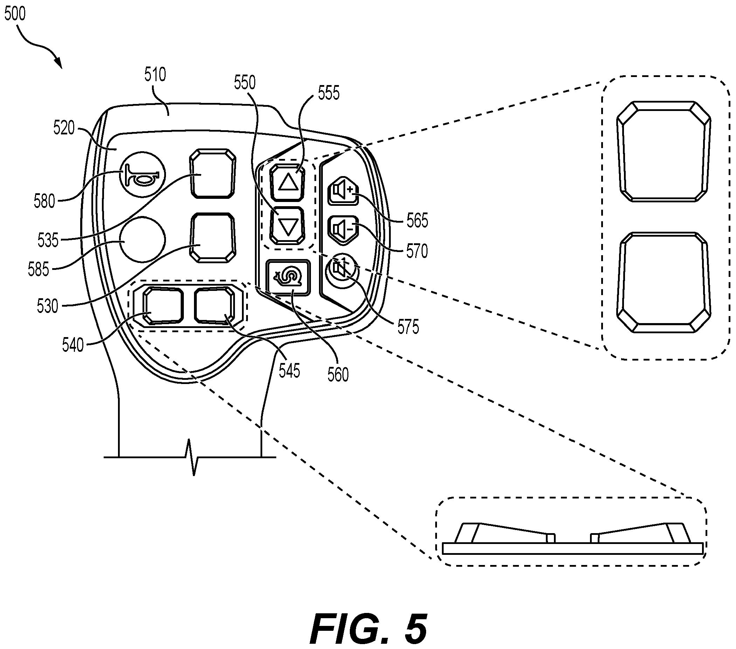

Fig. 5 is a diagram of an example asymmetric machine control component 500. Asymmetric machine control component 500 could be installed in machine 100 as either machine control component 170 or machine control component 170.

As shown in Fig. 5, asymmetric machine control component 500 may include an asymmetric grip portion 510 that includes an asymmetric faceplate 520. As shown in Fig. 5, asymmetric faceplate 520 may include an input element 530, an input element 535, an input element 540, an input element 545, an input element 550, an input element 555, an input element 560, an input element 565, an input element 570, an input element 575, an input element 580, and an input element 585. In some examples, asymmetric machine control component 500 may have a different look and feel and/or include a greater number or a lesser number of input elements. The input elements of Fig. 5 may include buttons, switches, and/or other types of input elements.

Input element 530, input element 535, input element 540, and input element 545 may be configured to perform functions similar to the functions described above in connection with input element 350, input element 360, input element 370, and input element 380. In some implementations, input element 530, input element 535, input element 540, and input element 545 may be part of hydraulic controls of asymmetric machine control component 500.

Input element 550, input element 555, and input element 560 may be configured to control a speed of machine 100. For example, input element 550 may be configured to increase the speed of machine 100, input element 560 may be configured to decrease the speed of machine 100, and input element 560 may be configured to set the speed of machine 100 to a threshold speed. The threshold speed may be associated with an operation being performed or to be performed by machine 100 and/or by implement 140. The operation may be an operation that requires the machine 100 to move slowly (e.g., move at a speed that is less than a typical operating speed of machine 100). The operator may use the input element 560 to set the speed of machine 100 to the threshold speed, may use input element 550 to increase the speed of machine 100 (e.g., after the speed has been set to the threshold speed), and/or use input element 555 to reduce the speed of machine 100 (e.g., after the speed has been set to the threshold speed).

Input element 565, input element 570, and input element 575 may be configured to control a sound output by machine 100. For example, input element 565, input element 570, and input element 575 may be configured to control a sound output by first speaker 210 and/or second speaker 220. For instance, input element 565 may be configured to increase a volume of the sound output by first speaker 210 and/or second speaker 220, input element 570 may be configured to decrease a volume of the sound output by first speaker 210 and/or second speaker 220, and input element 575 may be configured to mute the sound output by first speaker 210 and/or second speaker 220.

Input element 580 may be configured to control a sound output by machine 100. For example, input element 580 be configured to cause horn 230 to provide a sound output.

Input element 585 may be configured to cause information regarding implement 140, which is based on data provided by implement 140, to be presented on display device 180. The information regarding implement 140 has been described above in connection with Fig. 1. In some implementations, one or more work tools may be connected to machine 100 and/or implement 140. In this regard, input element 585 may cause information regarding the one or more work tools to be presented on display device 180, thereby enabling the operator to select (via display device 180 by using input element 330) a particular work tool to perform a particular operation. For example, the operator may select a first work tool to perform a first operation, select a second work tool to perform a second operation, and so on.

In some examples, input element 530, input element 535, input element 540, input element 545, input element 580, and input element 585 may be part of the primary controls of machine 100 (e.g., a second subset of the primary controls). Input element 550, input element 555, input element 560, input element 565, input element 570, and input element 575 may be part of the secondary controls of machine 100 (e.g., a second subset of the secondary controls). As shown in Fig. 5, the primary controls may be provided on a first portion of faceplate 520 and the secondary controls may be provided on a second portion of faceplate 520.

As shown Fig. 5, the input elements may be arranged to enable the operator to reach the input elements using a thumb while the operator is holding a shaft portion of asymmetric machine control component 500. In other words, a distance between the input elements may enable the operator to reach all the input elements with the thumb without having to release the grasp on the shaft portion of asymmetric machine control component 500. In some instances, the distance may be determined based on a hand size of an average operator.

As indicated above, Fig. 5 is provided as an example. Other examples may differ from what was described in connection with Fig. 5. For example, in some implementations, input element 550, input element 555, input element 560, input element 565, input element 570, input element 575, input element 580, and input element 585 may be provided on asymmetric machine control component 300 (instead of asymmetric machine control component 500).

Alternatively, a first subset of input element 550, input element 555, input element 560, input element 565, input element 570, input element 575, input element 580, and input element 585 may be provided on asymmetric machine control component 300 and a second subset of input element 550, input element 555, input element 560, input element 565, input element 570, input element 575, input element 580, and input element 585 may be provided on asymmetric machine control component 500. For example, input element 550, input element 555, and input element 560 may be provided on asymmetric machine control component 300 and input element 565, input element 570, input element 575, input element 580, and input element 585 may be provided on asymmetric machine control component 500, or vice versa.

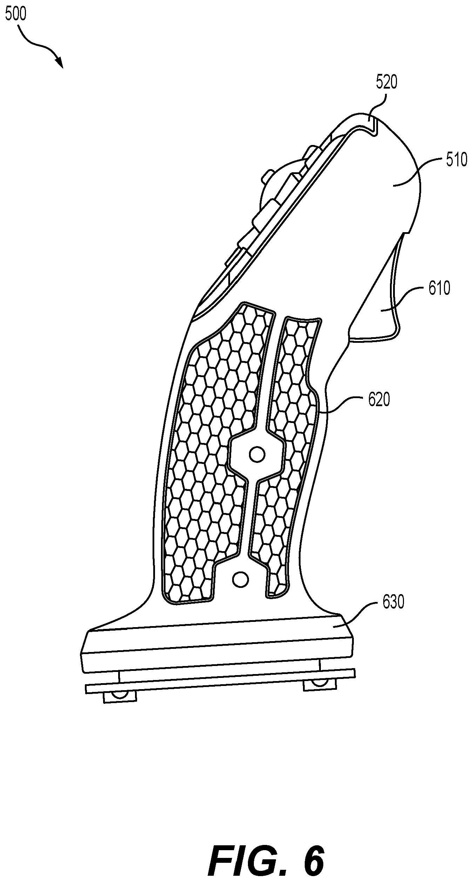

Fig. 6 is a diagram of a left side view of an example asymmetric machine control component 500 described herein. The elements of asymmetric machine control component 500 have been described above with respect to Fig. 5. As shown in Fig. 6, asymmetric machine control component 500 may include an input element 610, a shaft portion 620, and a base portion 630. Input element 610 may be configured to adjust the gear ratio of the transmission of machine 100. The adjustment of the gear ratio may adjust a speed of machine 100 resulting from a movement of asymmetric machine control component 500 and/or a movement of asymmetric machine control component 300. In other configurations, input element 610 may control other operations of the machine 100 or the implement 140.

Base portion 630 may be configured to enable asymmetric machine control component 500 to be mounted to a portion of operator cabin 150 (as described above in connection with Fig. 2).

As indicated above, Fig. 6 is provided as an example. Other examples may differ from what was described in connection with Fig. 6, such as with regard to the number and/or placement of the various input elements and textured sections provided.

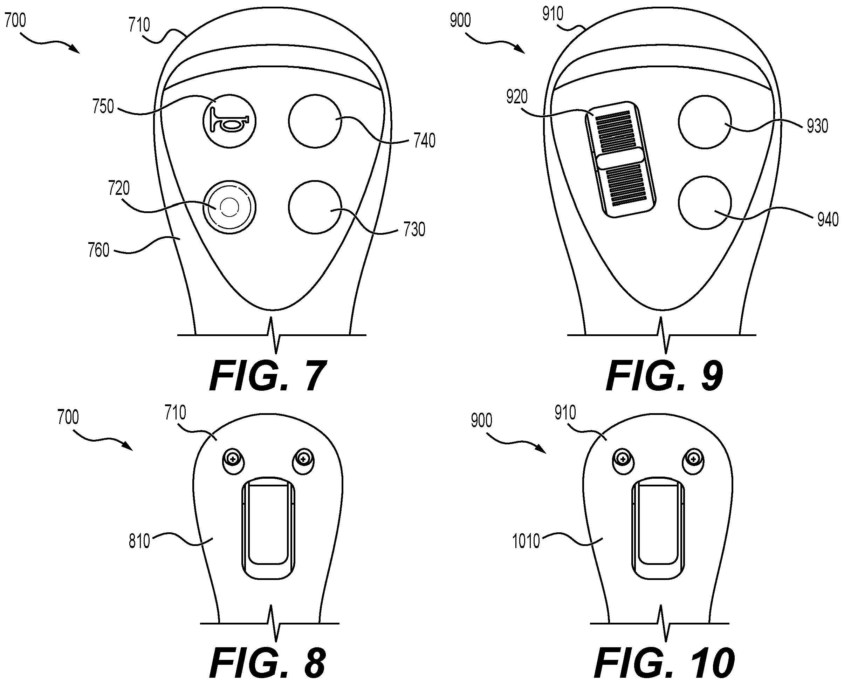

Fig. 7 is a diagram of an example machine control component 700 described herein. Machine control component 700 could be installed in machine 100 as either machine control component 170 or machine control component 170.

As shown in Fig. 7, machine control component 700 may include a grip portion 710 that includes a faceplate 720. As shown in Fig. 7, faceplate 720 may include an input element 730, an input element 740, an input element 750, and an input element 760. In some examples, machine control component 700 may have a different look and feel and/or include a greater number or a lesser number of input elements. The input elements of Fig. 7 may include buttons, switches, and/or other types of input elements.

Input element 730, input element 740, input element 750, and input element 760 may be configured to perform functions similar to the functions described above in connection with input element 530, input element 535, input element 580, and input element 585 or any of input element 530, input element 535, input element 540, input element 545, input element 550, input element 555, input element 560, input element 565, input element 570, input element 575, input element 580, and input element 585.

As indicated above, Fig. 7 is provided as an example. Other examples may differ from what was described in connection with Fig. 7. For example, in some implementations, input element 730, input element 740, input element 750, and input element 760 may be provided on machine control component 900 (instead of machine control component 700).

Alternatively, a first subset of input element 730, input element 740, input element 750, and input element 760 may be provided on machine control component 700 and a second subset of input element 730, input element 740, input element 750, and input element 760 may be provided on machine control component 900.

Fig. 8 is a diagram of a rear view of an example machine control component 700 described herein. The elements of machine control component 700 have been described above with respect to Fig. 7. As shown in Fig. 8, machine control component 700 may include an input element 810. Input element 810 may be configured to adjust the gear ratio of the transmission of machine 100. The adjustment of the gear ratio may adjust a speed of machine 100 resulting from a movement of machine control component 700 and/or a movement of machine control component 900. In other configurations, input element 810 may control other operations of the machine 100 or the implement 140.

As indicated above, Fig. 8 is provided as an example. Other examples may differ from what was described in connection with Fig. 8, such as with regard to the number and/or placement of the various input elements.

Fig. 9 is a diagram of an example machine control component 900 described herein. Machine control component 900 could be installed in machine 100 as either machine control component 170 or machine control component 170.

As shown in Fig. 9, machine control component 900 may include a grip portion 910 that includes a faceplate 920. As shown in Fig. 9, faceplate 920 may include an input element 920, an input element 930, and an input element 940. In some examples, machine control component 900 may have a different look and feel and/or include a greater number or a lesser number of input elements. The input elements of Fig. 9 may include buttons, switches, and/or other types of input elements.

Input element 920, input element 930, and input element 940 may be configured to perform functions similar to the functions described above in connection with input element 340, input element 350, and input element 360 or any of input element 330, input element 335, input element 340, input element 350, input element 360, input element 370, input element 380, and input element 390.

Input element 920, input element 930, and input element 940 may be part of hydraulic controls of machine control component 900. For example, input element 920, input element 930, and input element 940 may control hydraulic system 190 to cause hydraulic system 190 to supply hydraulic fluid to control an operation and/or a movement of implement 140. Input element 920, input element 930, and input element 940 may be configured to control hydraulic system 190 to cause different movements of implement 140.

Input element 920 may be configured to control an operation of implement 140 and/or a movement of implement 140. As shown in Fig. 9, input element 920 may be implemented as a scrolling input element (or a rolling input element). Input element 920 may be configured for proportional control of the operation and/or for proportional control of the movement of implement 140, in a manner similar to the manner described above in connection with Fig. 2. For example, scrolling (or rolling) input element 920 in a first direction (e.g., an upward direction) may increase a speed of the operation, increase an intensity of the operation, increase a speed of the movement, among other examples. Continuing with this example, scrolling (or rolling) input element 920 in a second direction (e.g., a downward direction) may decrease the speed of the operation, decrease an intensity of the operation, decrease the speed of the movement, among other examples. In some examples, input element 920, input element 930, and input element 940 may be configured to control movements of implement 140 by using a combination of the input elements 920, 930, and 940.

As indicated above, Fig. 9 is provided as an example. Other examples may differ from what was described in connection with Fig. 9. For example, a first subset of input elements may be provided on machine control component 900 and a second subset of input elements may be provided on machine control component 700.

Fig. 10 is a diagram of a rear view of an example machine control component 900 described herein. The elements of machine control component 900 have been described above with respect to Fig. 9. As shown in Fig. 10, machine control component 900 may include an input element 1010. Input element 1010 may be configured to adjust a gear ratio of a transmission of machine 100. The adjustment of the gear ratio may adjust a speed of machine 100 resulting from a movement of machine control component 900 and/or a movement of machine control component 700. In other configurations, input element 1010 may control other operations of the machine 100 or the implement 140.

As indicated above, Fig. 10 is provided as an example. Other examples may differ from what was described in connection with Fig. 10, such as with regard to the number and/or placement of the various input elements and textured sections provided.

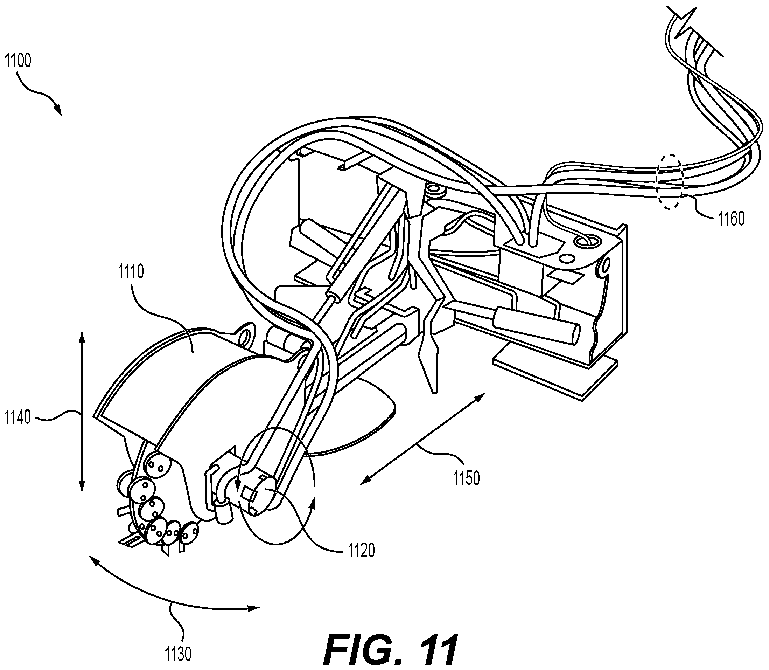

Fig. 11 is a diagram of an embodiment of a stump grinder 1100. Stump grinder 1100 includes a housing 1110, a cutting head 1115, and lines 1160. Stump grinder 1100 may be coupled to machine 100 as implement 140. Cutting head 1115 may include one or more cutting surfaces for grinding a tree stump. Lines 1160 may include one or more electrical lines for transmitting signals to and from machine 100. Lines 1160 may also include hydraulic lines coupled to hydraulic system 190 for controlling movement of various components of stump grinder 1100. For example, a rotational speed of cutting head 1115 indicated by arrows 1120; left and right movement of housing 1110 indicated by arrow 1130; up and down movement of housing 1110 indicated by arrow 1140; and extend and retract movement of housing 1110 indicated by arrow 1150.

The movements of the stump grinder 1100 are controlled by machine control component 160 and/or machine control component 170 by manipulating the input elements of machine control component 160 and/or machine control component 170. An example configuration of inputs at the input elements to control stump grinder 1100 are provided in Table 1 for machine control component 300 and machine control component 500. An example configuration of inputs at the input elements to control stump grinder 1100 are provided in Table 2 for machine control component 900 and machine control component 700.

**Table 1**

| Stump Grinder Movement | Machine control implement 300 | Machine control implement 500 |
|---|---|---|
| Cutting head rotate (1120) | Input element 340 | N/A |
| Angle left/right (1130) | N/A | Input element 540 - left |
| | | Input element 545 - right |
| Housing raise/lower (1140) | Input element 350 - raise | N/A |
| | Input element 360 - lower | |
| Housing extend/extract (1150) | N/A | Input element 535 - extend |
| | | Input element 530 - retract |

**Table 2**

| Stump Grinder Movement | Machine control implement 900 | Machine control implement 700 |
|---|---|---|
| Cutting head rotate (1120) | Input element 920 | N/A |
| Angle left/right (1130) | Input element 930 - left | N/A |
| | Input element 940 - right | |
| Housing raise/lower (1140) | Input element 930 - raise | Hold input element 730 |
| | Input element 940 - lower | |
| Housing extend/extract (1150) | Input element 930 - extend | Hold input element 740 |
| | Input element 940 - retract | |

Machine control implement 300 and machine control implement 500 have more input elements than machine control implement 900 and machine control implement 700, thus less complex inputs are required when using machine control element 300 and machine control element 500 to control the stump grinder 1100. Machine control implement 300 and machine control implement 500 utilize different input elements for each movement, while machine control implement 900 and machine control implement 700 may reuse input elements for each of the movements. For example, as shown in Table 1, only one input element (input element 350) must be activated on machine control implement 300 in order to raise the housing 1110. As shown in Table 2, two input elements (input element 930 and input element 730) must be activated on machine control implement 900 and machine control implement 700 in order to perform the operation of raising the housing 1110. In another example, as shown in Table 1, only one input element (input element 535) must be activated for machine control implement 500 in order to extend the housing 1110. As shown in Table 2, two input elements (input element 930 and input element 740) must be activated on machine control implement 900 and machine control implement 700 in order to perform the operation of extending the housing 1110. Note input element 930 is used to raise and extend the housing 1110.

The input elements used to perform operations using the stump grinder 1100 via machine control implement 300 and machine control implement 500 may correspond to directions of movement of the components of stump grinder 1100. For example, adjusting the angle of housing 1110 left or right may correspond to input element 540 and input element 545 respectively. Input element 540 and input element 545 are configured on machine control implement 500 such that input element 540 is left of input element 545 and input element 545 is right of input element 540. Thus, the desired movement of housing 1110 left or right may correspond to the location of the input element 540 and input element 545 on machine control component 500. As another example, to raise and lower housing 1110 may correspond to input element 350 and input element 360 respectively. Input element 350 and input element 360 are configured on machine control implement 300 such that input element 350 is above input element 360 and input element 360 is below input element 350. Thus, the desired movement of housing 1110 raising or lowering may correspond to the location of input element 350 and input element 360 on machine control component 300.

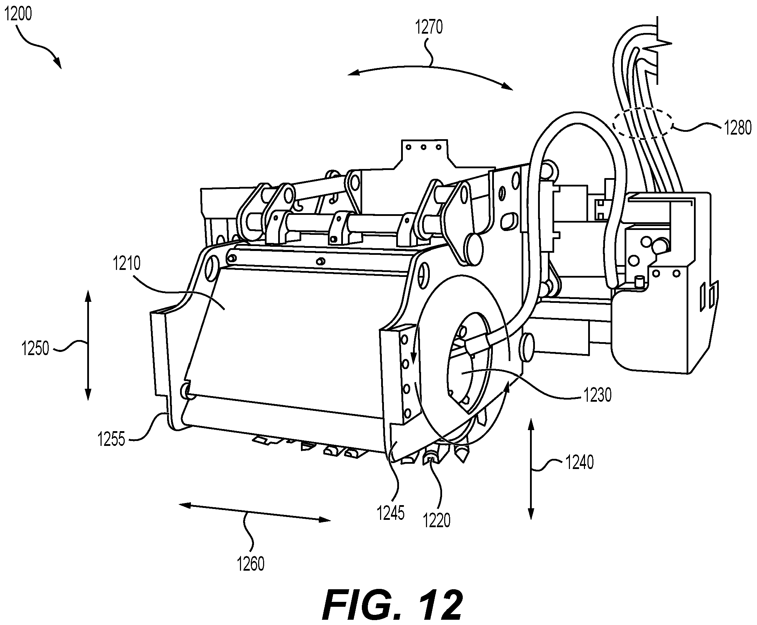

Fig. 12 is a diagram of an embodiment of a cold planer 1200. Cold planer 1200 includes a housing 1210, a drum 1220, skid shoe 1245, skid shoe 1255, and lines 1280. Cold planer 1200 may be coupled to machine 100 as implement 140. Drum 1220 may include one or more ground engaging portions for planing a surface for example, an asphalt roadway. Lines 1280 may include one or more electrical lines for transmitting signals to and from machine 100. Lines 1280 may also include hydraulic lines coupled to hydraulic system 190 for controlling movement of various components of cold planer 1200. For example, a rotational speed of drum 1220 indicated by arrows 1230; up and down movement of skid shoe 1245 indicated by arrow 1240; up and down movement of skid shoe 1255 indicated by arrow 1250; left and right movement of housing 1210 indicated by arrow 1260; and tilt left or right movement of housing 1210 indicated by arrow 1270.

The movements of the cold planer 1200 are controlled by machine control component 160 and/or machine control component 170 by manipulating the input elements of machine control component 160 and/or machine control component 170. An example configuration of inputs at the input elements to control cold planer 1200 are provided in Table 3 for machine control component 300 and machine control component 500. An example configuration of inputs at the input elements to control cold planer 1200 are provided in Table 4 for machine control component 900 and machine control component 700.

**Table 3**

| Cold Planer 1200 Movement | Machine control implement 300 | Machine control implement 500 |
|---|---|---|
| Drum 1220 rotate (1230) | Input element 340 | N/A |
| Skid Shoe 1245 raise/lower (1240) | N/A | Input element 530 - raise |
| | | Input element 535 - lower |
| Skid Shoe 1255 raise/lower (1250) | Input element 350 - left | N/A |
| | Input element 360 - right | |
| Housing 1210 left/right (1260) | N/A | Input element 540 - left |
| | | Input element 545 - right |
| Housing 1210 tilt left/right (1270) | Input element 380 - left | N/A |
| | Input element 370 - right | |

**Table 4**

| Cold Planer 1200 Movement | Machine control implement 900 | Machine control implement 700 |
|---|---|---|
| Drum 1220 rotate (1230) | Input element 920 | N/A |
| Skid Shoe 1245 raise/lower (1240) | Input element 930 - raise | Hold input element 730 |
| | Input element 940 - lower | |
| Skid Shoe 1255 raise/lower (1250) | Input element 930 - raise | Hold input element 740 |
| | Input element 940 - lower | |
| Housing 1210 left/right (1260) | Input element 930 - left | N/A |
| | Input element 940 - right | |
| Housing 1210 tilt left/right (1270) | Input element 930 - left | Hold input element 1010 |
| | Input element 940 - right | |

Machine control implement 300 and machine control implement 500 have more input elements than machine control implement 900 and machine control implement 700, thus less complex inputs are needed when using machine control element 300 and machine control element 500 to control the cold planer 1200. Machine control implement 300 and machine control implement 500 utilize different input elements for each movement of cold planer 1200, while machine control implement 900 and machine control implement 700 may reuse input elements for each of the movements of cold planer 1200. For example, as shown in Table 3, only one input element (input element 350) must be activated on machine control implement 300 in order to raise skid shoe 1255. As shown in Table 4, two input elements (input element 930 and input element 740) must be activated on machine control implement 900 and machine control implement 700 in order to perform the operation of raising skid shoe 1255. In another example, as shown in Table 3, only one input element (input element 530) must be activated for machine control implement 500 in order to raise skid shoe 1245. As shown in Table 4, two input elements (input element 930 and input element 730) must be activated on machine control implement 900 and machine control implement 700 in order to perform the operation of raising skid shoe 1245. Note input element 930 is used to raise both skid shoe 1245 and skid shoe 1255.

The input elements used to perform operations using the cold planer 1200 via machine control implement 300 and machine control implement 500 may correspond to directions of movement of the components of cold planer 1200. For example, adjusting housing 1210 left or right may correspond to input element 540 and input element 545 respectively. Input element 540 and input element 545 are configured on machine control implement 500 such that input element 540 is left of input element 545 and input element 545 is right of input element 540. Thus, the desired movement of housing 1210 left or right may correspond to the location of the input element 540 and input element 545 on machine control component 500. As another example, to raise and lower skid shoe 1255 may correspond to input element 350 and input element 360 respectively. Input element 350 and input element 360 are configured on machine control implement 300 such that input element 350 is above input element 360 and input element 360 is below input element 350. Thus, the desired movement of skid shoe 1255 raising or lowering may correspond to the location of input element 350 and input element 360 on machine control component 300. Further skid shoe 1255 is on one side of cold planer 1200 and skid shoe 1245 is on the opposite side of cold planer 1200. Machine control implement 300 and machine control implement 500 may be configured in operator cabin 150 to correspond to the sides of skid shoe 1245 and skid shoe 1255. For example, machine control implement 300 is on the same side of operator cabin 150 as the skid shoe 1255. The positioning of machine control implements and input elements may be selected to correspond to movements of implement 140, thus simplifying control of implement 140.

The input element configurations shown in Tables 1-4 may be stored in storage on the machine 100, for example in memory 186 of control system 182. Control system 182 may be all or part of an electronic control module (ECM) (not pictured) of machine 100.

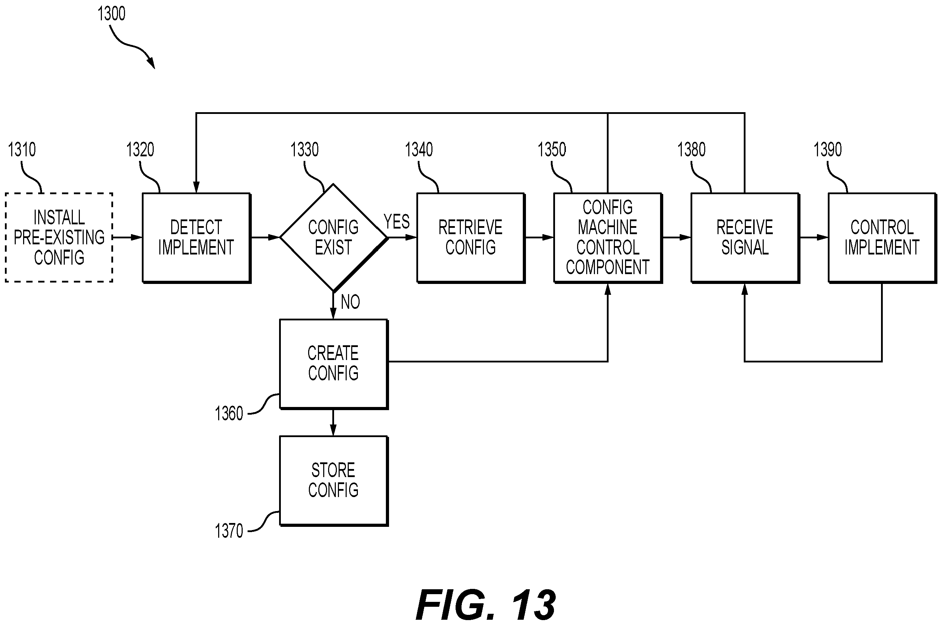

Figure 13 is a flow diagram of an embodiment of a method 1300 for configuring machine control implements. Method 1300 begins optionally at block 1310 where pre-existing machine control component configurations may be installed on a machine, for example machine 100. The machine control component configurations may be stored by a control system, for example control system 182. The control system may store the machine control component configurations in a memory, for example memory 186. Each machine control component configuration may correspond to a different implement (e.g., implement 140). For example, a first machine control component configuration may be loaded for a stump grinder, a second machine control component configuration may be loaded for a bucket, a third machine control component configuration may be loaded for a cold planer, and additional machine control component configurations may be loaded for any other implements that may be connected to the machine.

Method 1300 continues at step 1320 when the machine may detect a connected implement. Detection may occur in a number of ways, for example an operator may provide an input to the control system via display device 180 or some other input device, for example a bar code reader or keyboard. In another example, the machine may detect the attached implement via wireless communication, for example radio frequency identification (RFID), near-field communication (NFC), or some other passive or active wireless technology.

After the implement is detected by the machine, the control system determines at block 1330 whether a machine control component configuration exists in memory for the implement. The machine control component configuration may be identified by a unique identifier, for example a name or number corresponding to the implement. If a machine control component configuration exists in memory, the control system retrieves the machine control component configuration at block 1340 and configures one or more machine control components, for example machine control component 160 and machine control component 170, with the machine control component configuration.

If a machine control component configuration does not exist in memory for the implement, the method continues at block 1360 where a machine control component configuration is created for the implement. Creation of the machine control component configuration may include prompting the operator for inputs, downloading a pre-existing machine control component configuration for the implement, or receiving the machine control component configuration from some other source. When the machine control component configuration is created, the control system stores the machine control component configuration to memory at block 1370. The control system then configures one or more machine control components, for example machine control component 160 and machine control component 170, with the machine control component configuration. After the machine control components are configured using the machine control component configuration, the control system may receive a signal from the machine control component at block 1380. The signal maybe transmitted to or sensed by the control system when an operator interacts with the machine control component. For example, depressing a button on a joystick. Based on the signal received in block 1380 and the current machine control component configuration, the control system may control the attached implement at block 1390. For example, the signal may be received by the control system when an operator depresses a button on the joystick corresponding to an upward movement of a bucket, in response to the signal the control system may cause the bucket to move upward. Movement may be caused by controlling a hydraulic system (e.g., hydraulic system 190) or an electric actuator connected to the implement. The method 1300 returns to step 1320 when a newly connected implement is detected by the machine.

### Industrial Applicability

The present disclosure relates to intuitively configuring input elements (e.g., buttons or scroll wheels) of machine control components (e.g., joysticks) that control various operations of a machine (e.g., a construction or mining machinery) and/or an implement (e.g., a bucket, stump grinder, brush cutter, grappler, trencher, auger, or any other attachment) of the machine. The machine control components may be installed in a cab of the machine or elsewhere (for example, a remote operating location) for an operator to control the machine and implement. The implements may vary in complexity from a relatively simple fixed bucket to a complex GPS assisted grading attachment capable of movement along multiple axes. More complex implements typically utilize complex control sequences input via the machine control components. The complex control sequences are often unmarked and can cause confusion for operators, especially when an implement is not used often. The operators must then seek training materials leading to machine down time.

The machine may include a control system with a processor and memory for storing machine control component configurations for multiple implements that may be attached to them machine. The control system communicates with the machine control components, other electronic control systems, a graphical user interface or other interface device, and the implement. The control system and other components provide an intuitive and customizable interface between an operator and the implement. For example, a machine control component configuration for a stump grinder may configure input elements that correspond with the desired movement of the stump grinder. In particular, movement of the stump grinder left or right may be configured to correspond to a pair of buttons that are oriented to the left and right of each other.

One advantage provided by the intuitive configurations is that a custom layout of buttons (input elements) and digital outputs from the machine control components may allow the control system to process a single button press to perform multiple hydraulic actuations of the implement. This creates an intuitive and simple control for complex work tools, resulting in a shorter learning curve for operators and less machine downtime between the work tool changeovers.

The intuitive configurable control system may include labeled functions, backlighting, and the layout of buttons (vertically or horizontally nested) on joystick controls. The intuitive configurable control system may further include automatic or user-selectable functions of joystick control buttons depending on which work tool is attached and/or configurable joystick buttons for user preferences. Furthermore, the intuitive configurable control system may include control systems that provide simultaneous electronic control of hydraulic operations.

The foregoing disclosure provides illustration and description, but is not intended to be exhaustive or to limit the implementations to the precise forms disclosed. Modifications and variations may be made in light of the above disclosure or may be acquired from practice of the implementations. Furthermore, any of the implementations described herein may be combined unless the foregoing disclosure expressly provides a reason that one or more implementations cannot be combined. Even though particular combinations of features are recited in the claims and/or disclosed in the specification, these combinations are not intended to limit the disclosure of various implementations. Although each dependent claim listed below may directly depend on only one claim, the disclosure of various implementations includes each dependent claim in combination with every other claim in the claim set.

As used herein, "a," "an," and a "set" are intended to include one or more items, and may be used interchangeably with "one or more." Further, as used herein, the article "the" is intended to include one or more items referenced in connection with the article "the" and may be used interchangeably with "the one or more." Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of'). Further, spatially relative terms, such as "below," "lower," "above," "upper," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly.

## Claims

1. A machine comprising:
a first implement;
a first machine control component; and
a control system comprising:
a memory; and
a processor in communication with the memory and configured to execute instructions stored in the memory to cause the control system to:
detect the first implement;
determine whether a first configuration corresponding to the first implement is stored in the memory; and
configure the first machine control component based on the first configuration when the first configuration is stored in the memory.

2. The machine of claim 1, wherein when the first configuration is not stored in the memory the instructions further cause the control system to:
create the first configuration based on one or more of data received from a remote source or inputs received locally at the machine;
store the first configuration in the memory; and
configure the first machine control component based on the first configuration.

3. The machine of claim 1 or 2, wherein the instructions further cause the control system to:
receive a signal from the first implement; and
control the first implement based on the signal.

4. The machine of any of claims 1-3, further comprising a second machine control component, wherein the instructions further cause the control system to configure the second machine control component based on the first configuration when the first configuration is stored in the memory, and
optionally, wherein the first machine control component comprises a first plurality of input elements, the first implement is configured to move along a first axis, the first configuration configures two of the first plurality of input elements to control movement along the first axis, and a location of the two of the first plurality of input elements corresponds to the first axis.

5. The machine of claim 4, wherein the first implement is further configured to move along a second axis, and wherein the first configuration configures another two of the first plurality of input elements to control movement along the second axis, and a location of the another two of the first plurality of input elements corresponds to the second axis.

6. The machine of claim 4 or 5, wherein the second machine control component comprises a second plurality of input elements, the first implement is configured to move along a second axis, and wherein the first configuration configures two of the second plurality of input elements to control movement along the second axis, and a location of the two of the second plurality of input elements corresponds to the second axis, and
optionally, wherein the first implement is configured to:
move along a third axis corresponding to a first side of the first implement;
move along a fourth axis corresponding to a second side of the first implement,
wherein the machine further comprises a cab, and wherein a location of the first machine control component in the cab corresponds to the first side and a location of the second machine control component corresponds to the second side,
wherein the first configuration configures at least a portion of the first plurality of input elements to control movement along the third axis, and
wherein the first configuration configures at least a portion of the second plurality of input elements to control movement along the fourth axis.

7. A control system comprising:
a memory; and
a processor in communication with the memory and configured to execute instructions stored in the memory to cause the control system to:
detect a first implement of a machine;
determine whether a first configuration corresponding to the first implement is stored in the memory; and
configure a first machine control component based on the first configuration when the first configuration is stored in the memory.

8. The control system of claim 7, wherein when the first configuration is not stored in the memory the instructions further cause the control system to:
create the first configuration based on one or more of data received from a remote source or inputs received locally at the machine;
store the first configuration in the memory; and
configure the first machine control component based on the first configuration.

9. The control system of claim 7 or 8, wherein the instructions further cause the control system to:
receive a signal from the first implement; and
control the first implement based on the signal.

10. The control system of any of claims 7-9, wherein the instructions further cause the control system to configure a second machine control component based on the first configuration when the first configuration is stored in the memory, and
optionally, wherein the first machine control component comprises a first plurality of input elements, the first implement is configured to move along a first axis, the first configuration configures two of the first plurality of input elements to control movement along the first axis, and a location of the two of the first plurality of input elements corresponds to the first axis.

11. The control system of claim 10, wherein the first implement is further configured to move along a second axis, and wherein the first configuration configures another two of the first plurality of input elements to control movement along the second axis, and a location of the another two of the first plurality of input elements corresponds to the second axis.

12. The control system of claim 10 or 11, wherein the second machine control component comprises a second plurality of input elements, the first implement is configured to move along a second axis, and wherein the first configuration configures two of the second plurality of input elements to control movement along the second axis, and a location of the two of the second plurality of input elements corresponds to the second axis, and
optionally, wherein the first implement is configured to:
move along a third axis corresponding to a first side of the first implement;
move along a fourth axis corresponding to a second side of the first implement,
wherein the machine comprises a cab, and wherein a location of the first machine control component in the cab corresponds to the first side and a location of the second machine control component corresponds to the second side,
wherein the first configuration configures at least a portion of the first plurality of input elements to control movement along the third axis, and
wherein the first configuration configures at least a portion of the second plurality of input elements to control movement along the fourth axis.

13. A method for intuitive machine control component configuration comprising:
detecting, by a control system of a machine, a first implement coupled to the machine;
determining, by the control system, whether a first configuration corresponding to the first implement is stored in a memory; and
configuring, by the control system, the first machine control component based on the first configuration when the first configuration is stored in the memory.

14. The method of claim 13, further comprising when the first configuration is not stored in the memory:
creating, by the control system, the first configuration based on one or more of data received from a remote source or inputs received locally at the machine;
storing, by the control system, the first configuration in the memory; and
configuring, by the control system, the first machine control component based on the first configuration.

15. The method of claim 13 or 14, further comprising:
receiving, by the control system, a signal from the first implement; and
controlling, by the control system, the first implement based on the signal.
